# EUROPÄISCHE PATENTSCHRIFT

(11) **EP 1 761 607 B1**
(45) Veröffentlichungstag und Bekanntmachung des Hinweises auf die Patenterteilung: **20.10.2010**
(21) Anmeldenummer: 05754741.6
(22) Anmeldetag: 16.06.2005
(51) Int. Cl.: C09B 67/04

(54) **VERFAHREN ZUR HERSTELLUNG VON BETA-KUPFERPHTHALOCYANIN-BLAUPIGMENTEN UND DEREN VERWENDUNG**
METHOD FOR PRODUCING BETA-COPPER PHTHALOCYANINE BLUE PIGMENTS AND USE THEREOF
PROCEDE POUR PRODUIRE DES PIGMENTS BLEUS DE PHTALOCYANINE DE CUIVRE BETA ET UTILISATION DE CES PIGMENTS

(30) Priorität: 16.06.2004 DE 102004028791
(43) Veröffentlichungstag der Anmeldung: 14.03.2007
(73) Patentinhaber: Colour Ltd., Hamilton, Bermuda HM DX (BM)
(72) Erfinder: HEUBACH, Rainer, A-5084 Grossgmain (AT); LIESKE, Dieter, 38690 Vienenburg (DE)
(74) Vertreter: Hagemann, Heinrich
(86) Internationale Anmeldenummer: PCT/EP2005/006490
(87) Internationale Veröffentlichungsnummer: WO 2005/123844

(56) Entgegenhaltungen:
- EP-A- 0 350 687
- EP-A- 0 702 062
- EP-A- 0 764 701
- EP-A- 0 774 494
- EP-A- 0 783 029
- WO-A-99/54410
- WO-A-2004/011558
- GB-A- 2 051 108
- US-A- 3 849 150
- US-A- 4 298 526
- US-A- 5 175 282
- US-A- 5 281 268
- US-A1- 2003 127 023

## Beschreibung

Die Erfindung betrifft ein Verfahren zur Herstellung wässriger Suspensionen von β-Kupferphthalocyanin-Blaupigmenten durch Nass-Kovermahlung von Rohblau mit verschiedenen Zusatzstoffen mittels Rührwerkskugelmühle, die direkte Isolierung der bereits konditionierten, zum Pigmentieren einzufärbender Systeme geeigneten Farbmittel aus dem Mahlgut sowie die unmittelbare Umwandlung der wässrigen Suspension in lipophile Lack- und Druckfarbenkonzentrate, vornehmlich für den Offsetdruck.

Bei einem allgemein üblichen Finishverfahren polycyclischer organischer Pigmente wird das grobteilige Rohmaterial (Crude) gegebenenfalls in Gegenwart von Mahlhilfsmitteln zwecks Umwandlung in ein Pigment zunächst in Kugel- oder Schwingmühlen oder anderen Zerkleinerungsaggregaten auf eine für den Einsatz als Pigment geeignete Primärteilchengröße von 100 - 10 Nanometer (nm) trocken vermahlen, wobei die anfallenden mikronisierten Partikel in Folge Van-der-Waals'scher und elektrostatischer Kräfte agglomerieren. Die agglomerierten Teilchen werden in einem nachfolgenden Prozess-Schritt durch Behandlung mit großen Mengen an aromatischen Lösungsmitteln oder Alkoholen oder Mischungen der o.g. Lösemittel mit Wasser desagglomeriert. Dies erfolgt dadurch, dass das vorgemahlene Pulver in Gegenwart ausreichender Menge Flüssigphase und gegebenenfalls Zusatzstoffen in einem Rührreaktor thermisch nachbehandelt wird. Unter Rühren und Erhitzen der Pigment-suspension unter Rückflussbedingungen werden die Agglomerate zerlegt und die Kristallite in die β-Struktur überführt.

Die Zugabe von Wasser ermöglicht es, das Lösemittel durch azeotrope Destillation zu entfernen und das Pigment in eine rein wässrige Suspension zu überführen. Eine derartige Aufschlämmung wird nachfolgend in eine Filterpresse überführt, die Mutterlauge abgepresst und Rückstände an Verunreinigungen aus dem verbleibenden Presskuchen ausgewaschen. Der reine Presskuchen ist nun geeignet, durch einen sog. Flushprozess in ein blaues Farbkonzentrat überführt zu werden oder aus ihm durch Trocknung und Vermahlung ein Pulverpigment zu isolieren.

Aufgrund der zweistufigen Überführung des Rohblaus in ein dem heutigen Stand der Technik entsprechendes, qualitativ hochwertiges Pigment ist oben beschriebenes Verfahren ökonomisch nachteilig und teuer.

Des Weiteren ist - im Falle der Flushproduktion für die Druckfarbenherstellung - der Einsatz eines Dreiwalzenstuhles zum Zerkleinern übergroßer Teilchen als Sicherheitsmaßnahme dringend erforderlich, wobei gleichzeitig ein Entgasen der Präparation gewährleistet wird.

Bei dem "Salzmahlverfahren" erzeugt man auf herkömmliche Weise ein Farbmittel dadurch, dass Crude in Gegenwart großer Mengen mikronisierten Salzes und Glycolen gegebenenfalls unter Zusatz von Additiven durch mechanische Behandlung in einem Kollergang oder in einem Kneter zerkleinert wird. Nach diesem Vermahlungsschritt wird die gesamte Masse in einem wässrigem Medium aufgeschlämmt. Die Salze und Glycole gehen in Lösung und können in einer Filterpresse von dem Pre-Pigment durch Abfiltrieren und Nachwaschen abgetrennt werden. In der Regel schließt sich auch bei diesem Prozess eine thermische Nachbehandlung des erhaltenen Presskuchens in Lösemittelsystemen an. Der nach Entfernen der Lösemittel und Verunreinigungen durch Destillation und/oder Filtration erhaltene Pigmentpresskuchen kann wiederum durch "Flushen" in einem geeigneten Varnish in ein Farbkonzentrat überführt werden oder als Basis zur Herstellung von β-Phthalocyanin-Pigment-Pulvern Verwendung finden.

Auch dieses Verfahren erfordert zwei Pigmentierungsschritte und die Verwendung großer Mengen wirtschaftlich nicht-rückgewinnbarer Salze und Glycole. Dies ist ein großer ökonomischer und ökologischer Nachteil.

Zur Herstellung von Pigmenten, die für Systeme auf lipophiler Basis geeignet sind, gibt es einen umfänglichen Stand der Technik, den u.a. die nachfolgend zitierten Druckschriften dokumentieren. Sie betreffen das Finishing von organischen Pigmenten, insbesondere von polycyclischen Pigmenten, dort insbesondere von Phthalocyanin-, Chinacridon-, Perylen-, Perinon-, Anthrachinon- und Dioxazin-Pigmenten. Prozesse, die sich mit diesen Verfahren befassen, gehen z.B. aus der US 3 849 150, US 5 944 887, EP-A-0 087 713 sowie EP 350 687 hervor.

Das Mahl-/Rekristallisierung-/Konditionierungs-Verfahren als auch die "*Salzmahlmethode*" mit nachfolgender Kristallphasen-dirigierender Konditionierung geht beispielsweise aus der US 4 298 526 bzw. der korrespondierenden DE 28 51 752 hervor. Den eingesetzten, bevorzugt aromatischen oder Glycolether umfassenden Lösemitteln wird allgemein von Fachleuten eine Schlüsselrolle bei der Einstellung der verschiedenen Energieminima zur Bildung geordneter fester Phasen (Kristallite) in dadurch gezielt steuerbarer Modifikationsbildung bei polymorphen Substanzen zuerkannt. Gleichzeitig steuern diese Substanzen im Verbund mit weiteren Zusätzen und dem gewählten zeitlichen Temperaturverlauf das Wachstum und in gewissen Grenzen auch die Form der pigmentären Zielsubstanzen. Dies wird beispielsweise in der Literatur eingehend dargestellt (Smith,H.M.: "High Performance Pigments", Weinheim: VGH-Wiley 2002, S.118-122, 286 - 289; Herbst,W., Hunger,K.: "Industrial Organic Pigments", Weinheim: VCH-Wiley 1993, S. 16-18, 41-43)

Keines der Verfahren nach dem Stand der Technik ist frei von Nachteilen, insbesondere im Hinblick auf große Mengen umweltbelastender Nebenprodukte und Rückstände sowie unter dem Gesichtspunkt wirtschaftlicher Nachteile. Sämtliche Druckschriften beschreiben lediglich Verfahren, die mühevolle, zeit- und materialaufwändige und nicht verlustfreie Finish-Behandlungen erfordern und teilweise nicht sicher geführt werden können, insbesondere hinsichtlich ökologischer und sicherheitstechnischer Gesichtspunkte.

Auch in den Druckschriften EP,A,783,029, GB,A,2,051,108, US,A,5,175,282 sowie WO,A,99/54410 werden verschiedene Konditionierungsverfahren von beta-Kupferphthalocyanin beschrieben.

Der nachfolgend geschilderten Erfindung lag daher die Aufgabe zugrunde, das eingangs geschilderte Verfahren für die Herstellung von β-Kupferphthalocyaninen so zu optimieren, dass die resultierenden Produkte die qualitativen Kundenanforderungen erfüllen und gleichzeitig der technische Aufwand der Produktion reduziert wird.

Diese Aufgabe wird erfindungsgemäß bei dem Verfahren der eingangs beschriebenen Art dadurch gelöst, dass
**a)** ein Phthalocyanin-Rohblau mittels eines Dissolvers in einem wässrigen Medium suspendiert wird und
**b)** die erhaltene wässrige Suspension des Phthalocyanin-Rohblaus bei einer Temperatur von 30°C bis 95°C in einer Rührwerkskugelmühle, in der der Füllgrad mit Mahlperlen 60 bis 95 Vol.-% beträgt, zu einer Suspension eines β-Phthalocyanin-Blaupigments vermahlen und konditioniert wird, wobei
**c)** der wässrigen Suspension des β-Phthalocyanin-Rohblaus ein Dispergiermittel, ein Bindemittelharz, eine β-Phasen-dirigierende aromatische Verbindung, ein Druckfarbenöl, ein polares Lösungsmittel als Lösungsvermittler und eine Base einverleibt sind.
Das angesprochene wässrige Medium bei dem Schritt a) enthält mit dem endgültigen Anwendungsmedium kompatible bindemittelähnliche Substanzen, Kristallphasen-dirigierende und/oder Pigmentoberflächen-konditionierende Verbindungen. Bevorzugt wird es dabei, dass die Substanzen bzw. Verbindungen gemäß Merkmal c) in dem wässrigen Medium, einzeln oder insgesamt zu nicht mehr als 0,1 bis 25 Gew.-%, insbesondere 1 bis 10 Gew.-%, enthalten sind.

Das erfindungsgemäße Verfahren gliedert sich demzufolge zum Erhalt einer Suspension eines β-Phthalocyanin-Blaupigments in zwei einfach zu führende Verfahrensschritte a) und b), um insbesondere ein Kupfer-Phthalocyanin-Blaupigment in β-modifikation zu erhalten (C.I. P.B. 15:3). Dabei ist es lediglich erforderlich, in einem wässrigen Medium in Schritt a) zunächst beispielsweise ein Bindemittelharzharz, eine langkettige Carbonsäure, ein Druckfarbenöl und eine aromatische Verbindung einzubeziehen und das des Weiteren darin enthaltene Phthalocyanin-Rohblau ("Crude") mit einem Dissolver zu suspendieren.

Im Rahmen rein fachmännischen Vorgehens lässt sich die Menge der in dem wässrigen Medium eingesetzten, oben bezeichneten Materialien so kalkulieren, dass im anschließenden Schritt b) die erhaltene wässrige Suspension des Phthalocyanin-Rohblaus so beschaffen ist, dass sie in einer Rührwerkskugelmühle problemlos zu der gewünschten Suspension eines β-Phthalocyanin-Blaupigments vermahlen werden kann.

Als Bindemittelharze können verschiedene Harze und auch Harzgemische verwendet werden. Als Beispiele seien genannt: Thermoplaste, teilweise vernetzte Harze mit teilweise duroplastischem Charakter, insbesondere KolophoniumHarze, hydrierte, veresterte und phenol- oder maleinmodifizierte KolophoniumHarze sowie durch Substitution oder Veresterung mit mehrwertigen Alkoholen teilvernetzte Derivate oben genannter Produkte sowie Mischungen hiervon. Des

Weiteren können Kohlenwasserstoff- und Alkydharze eingesetzt werden. Bevorzugt werden folgende Harze: Aromatische Kohlenwasserstoffharze, Alkydharze, Pentaerythritol-Rosin-Ester, Kolophoniumharze, Phenolmodifizierte Rosin-Ester, Maleinmodifizierte Rosin-Ester, Ketonharze, Aldehydharze, Melamin-Formaldehyd-Kondensationsharze und Acrylharze. Bevorzugt wird man aus Kompatibilitätsgründen bereits hier gezielt ein dem späteren Anwendungsgebiet entsprechendes Harzsystem einbringen.

Bei den Kristallphasen-dirigierenden aromatischen Verbindungen handelt es sich insbesondere um - gegebenenfalls auch alkylierte und/oder halogenierte - Benzole und Naphthaline sowie Benzylalkohol, Diphenylmethan, Benzhydrol, Benzoesäure, Phenole, Stilbene, Acenaphthen, Anthracen, Furane, 1,8-Naphthalimid, Benzil, Diphenylcarbinol, 1-Methylnaphthalin, Phthalsäureanhydrid, Benzophenon und/oder Dibenzylether. Grundsätzlich sind solche aromatischen Verbindungen "β-dirigierend", wenn sie im rekristallisierenden Medium löslich oder zumindest teillöslich sind.

Wenn im Rahmen der Erfindung von einer "langkettigen Carbonsäure" gesprochen wird, so orientiert sich dieses Merkmal im Wesentlichen daran, dass sie zwar Säurecharakter zeigen soll, insbesondere aber bewirkt, dass sie mit einer hydrophilen Gruppierung einerseits und einer längeren hydrophoben Alkylkette andererseits neben den u.g. Lösemitteln und Dispergiermitteln quasi als Bindeglied zwischen den organischen Harzen, Ölen und Farbmittelteilchen einerseits und dem wässrigen Medium andererseits fungiert. Als grobe Richtlinie kann angegeben werden, dass die langkettige Carbonsäure etwa 10 bis 18 Kohlenstoffatome aufweisen sollte und auch Doppelbindungen enthalten kann. Bevorzugt werden Stearinsäure, Palmitinsäure, Ölsaure, Dodecansäure, Linolsäure, Linolensäure und/oder Myristinsäure eingesetzt.

Weiterhin wird ein übliches Druckfarbenöl eingesetzt. Hierbei handelt es sich neben Pflanzenölen insbesondere um Produkte, die aus Erdölraffinaten gewonnen werden. Aber auch chemisch modifizierte Pflanzenöle kommen zum Einsatz. Hierbei werden insbesondere Mineralöle der Fa. Haltermann (PKW- und PKWF- Typen) sowie (auch chemisch modifizierte) Pflanzenöle verwendet.

Der im Rahmen der Erfindung in Schritt a) eingesetzten aromatischen Verbindung kommt die Charakteristik einer β-dirigierenden Verbindung zu, um - in Kombination mit den anderen Zusatzstoffen - das Ausgangsmaterial in das gewünschte Endprodukt der β-Modifikation von Kupferphthalocyanin mit weiteren wünschenswerten Eigenschaften zu überführen.

Zur Erhöhung der Benetzbarkeit bzw. Kompatibilität der nicht wasserlöslichen - Reagglomeration verhindernden - organischen Harze, Öle und aromatischen Verbindungen wird bevorzugt, dem wässrigen Medium insbesondere im Schritt a) oder auch nach Abschluss des Schritts a) ein Dispergierhilfsmittel und/oder alle polaren Lösungsmittel, welche die Funktion eines Lösungsvermittlers haben, zuzusetzen. Hierbei haben sich als besonders vorteilhaft erwiesen: Cyclohexanol, Dioxan, Butylglycol, Amylalkohol, Dodecylalkohol, Aceton, 2-Methyl-3-buten-2-ol, Dimethylformamid, Dimethylsulfoxid, 3-Methy-1-butanol, Tetrahydrofuran und /oder Polyethylenglycol.

Im Allgemeinen sollte seine Menge etwa 0,1 bis 20 Gew.-% des wässrigen Mediums betragen. Ganz besonders bevorzugt wird der Bereich von 0,5 bis 10 Gew.-%. In Einzelfällen ist es vorteilhaft, im Schritt a) zusätzlich eine Base einzusetzen, wobei hier insbesondere Kaliumhydroxid, Natriumhydroxid, eine wässrige Ammoniaklösung, Monoethanolamin oder Triethanolamin verwendet werden. -Es ist ersichtlich, dass diese Aufzählung keine Beschränkung darstellt, sondern lediglich beispielgebenden Charakter hat. Der Einsatz der Base bewirkt ein partielles Lösen der langkettigen Carbonsäuren sowie der Kolophonium- und Acrylharze. In der Regel sollte eine Menge von etwa 0,3 bis 2,0 Gew.-% , insbesondere 0,4 bis 1,4 Gew.-% den aufgezeigten Zweck erreichen lassen.

Unter Beachtung der vorstehenden Ausführungen zum Kern der Schritte a) und b) wird insbesondere erreicht, dass die gewünschte Farbcharakteristik sowie wichtige applikationstechnische Eigenschaften der Pigmente erhalten werden. Die später beispielhaft noch angegebenen Endzusammensetzungen sollen lediglich eine Richtlinie darstellen , wobei auch fakultative und optimierende Bestandteile einbezogen sind: Wasser (vorgelegt) 40 bis 60 Gew.-%, Base 0,3 bis 2,0 Gew.-% , Dispergierhilfsmittel (fakultativ) 0,1 bis 0,9 Gew.-%, Bindemittelharz 1,0 bis 5,0 Gew.-%, langkettige Carbonsäure 1,0 bis 5,0 Gew.-%, Druckfarbenöl 0,7 bis 7,0 Gew.-%, aromatische Verbindung als β-dirigierendes Mittel 0,1 bis 8,0 Gew.-%, polares organisches Lösungsmittel (fakultativ) 0,1 bis 20 Gew.-% und Kupferphthalocyanin-Rohblau (Crude) 15 bis 55 Gew.-%.

Nach der Zugabe des Harzes, der langkettigen Carbonsäure, des Druckfarbenöls und der β-dirigierenden aromatischen Verbindung wird vorzugsweise jeweils etwa 10 Minuten, nach Chargieren des Rohblaus etwa 40 Minuten nachgerührt.

Es wurde vorstehend bereits eine Rahmenrezeptur dargestellt, die in der Praxis von Wert ist. Grundsätzlich lässt sich sagen, dass es von Vorteil ist, wenn die wässrige Suspension beim Schritt a) 15 bis 55 Gew.-% Phthalocyanin-Rohblau-Pigment, insbesondere 30 bis 50 Gew.-%, und 40 bis 60 Gew.-%, insbesondere 45 bis 55 Gew.-%, Wasser enthält, wobei der Rest auf 100% auf die angesprochenen restlichen Bestandteile entfällt. Für die fakultativ herangezogenen zusätzlichen Materialien in Form einer Base und/oder eines Dispergierhilfsmittels wird bevorzugt, dass das wässrige Medium im Schritt a) die Base in einer Menge von 0,3 bis 2,0 Gew.-%, insbesondere 0,4 bis 1,4 Gew.-%, und/oder das Dispergierhilfsmittel in einer Menge von 0,1 bis 0,9, insbesondere 0,2 bis 0,6 Gew.-%, enthält.

Unabhängig von der vorstehend angegebenen bevorzugten Rahmenrezeptur ist im Hinblick auf die verschiedenen zwingenden Bestandteile beim Schritt a) als vorteilhaft herauszustellen, dass das wässrige Medium das Bindemittelharz in einer Menge von 1,0 bis 5,0 Gew.-%, insbesondere 1,5 bis 3,5 Gew.-%, die langkettige Carbonsäure in einer Menge von 1,0 bis 5,0 Gew.-%, insbesondere 1,5 bis 3,0 Gew.-%, das Druckfarbenöl in einer Menge von 0,7 bis 7,0 Gew.-%, insbesondere 1,0 bis 4,5 Gew.-%, die aromatische Verbindung in einer Menge von 0,1 bis 8,0 Gew.-%, insbesondere 0,5 bis 6,0 Gew.-%, und/oder das polare organische Lösungsmitteln in einer Menge von 1,0 bis 20 Gew.-%, insbesondere 0,5 bis 10 Gew.-% enthält.

Unmittelbar nach Abschluss des Schritts a) kann sich der erfindungsgemäß auszuübende Schritt b) anschließen. Die nach Schritt a) erhaltene wässrige Suspension des Phthalocyanin-Rohblaus wird in einer Rührwerkskugelmühle ohne weitere wesentliche Maßnahmen zu einer Suspension eines β-Phthalocyanin-Blaupigments vermahlen. Dabei findet die Umwandlung des Phthalocyanin-Rohblaus vorzugsweise als "Eintopf"-Prozess mit parallel ablaufenden Schritten der mechanischen Vermahlung mittels Scher- und Stoßbeanspruchung sowie der Modifikationsumwandlung in die gewünschte β-Kristallstruktur mit parallel stattfindender Pigmentkonditionierung in einer Rührwerkskugelmühle in einem wässrigen System statt. Die Rührwerkskugelmühle, die eine Hochleistungsmühle ist, kann werden im Sinne einer optimierten Geometrie, eines optimalen Füllungsgrades und einer optimierten Viskosität der Mahlsuspension mit dem Ziel der maximalen Leistungseinkoppelung vorteilhaft modifiziert. Die Umfangsgeschwindigkeit des Rotors der Rührwerkskugelmühle liegt vorzugsweise bei 4 bis 18 m/s, insbesondere 9 bis 14 m/s. Vorzugsweise werden darin Mahlperlen aus Keramik oder Stahl eingesetzt. Diese haben vorzugsweise einen Durchmesser von 0,2 bis 1,5 mm, insbesondere von 0,5 bis 1,0 mm. Der Füllgrad der Rührwerkskugelmühle mit Mahlperlen liegt zweckmäßigerweise bei 60 bis 95 Vol.-%, insbesondere 80 bis 90 Vol.-%. Vorzugsweise wird der Schritt b) als Rezirkulationsverfahren durchgeführt. Dies geschieht insbesondere über einen mit einem effektiven Rührer bestückten Vorlagebehälter, der auch zur Herstellung des Premix in Schritt a) herangezogen werden kann, und eine externe Pumpe. Der Schritt b) entwickelt per se Hitze. Er wird bei erhöhter Temperatur durchgeführt, insbesondere bei einer Temperatur von 30 bis 95°C, wobei der Rahmen von 45 bis 70°C besonders bevorzugt ist. Für ein weitergehendes Optimieren wird eine besonders günstige Mahldauer (Verweilzeit des Mahlgutes in der Mühle) eingestellt. Diese liegt vorzugsweise zwischen 4 und 35 min, insbesondere zwischen 12 und 25 min.

Die oben erläuterten Schritte a) und b) lassen die Aufgabe, von der die vorliegende Erfindung ausgeht, im Rahmen rein handwerklicher Bemühungen problemlos lösen, wobei diese besonders günstig dadurch gelöst wird, daß die angesprochenen vorteilhaften Ausgestaltungen verwirklicht werden. Die verfahrensgemäß erhaltene wässrige Suspension kann mit Vorteil direkt in ein lipophiles Farbkonzentrat, insbesondere im Rahmen eines allgemein bekannten Flush-Kneterverfahrens, überführt werden.

Darüber hinaus ist es möglich, aus der erfindungsgemäß erhaltenen wässrigen Suspension das darin enthaltene, bereits konditionierte angestrebte β-Phthalocyanin-Blaupigment direkt zu isolieren. Dabei wird im Allgemeinen so vorgegangen, dass die wässrige Suspension bzw. das wässrige Mahlgut auf unter etwa 40°C abgekühlt und anschließend unter Rühren verdünnte Mineralsäure, wie beispielsweise Schwefelsäure oder Salzsäure mit einer Konzentration von 2 - 10 Gew.-% zugegeben wird, um einen pH-Wert von etwa 2 bis 6 einzustellen. Die Pigmentsuspension wird darauf in üblicher Weise filtriert, der Filterkuchen zunächst mit Leitungswasser, anschließend mit demineralisiertem Wasser neutral (pH > 6) und salzfrei (< 200 micro S/cm) gewaschen. Nach Trocknung wird das Material pulverisiert.

Die mit der Erfindung erzielbaren Vorteile sind vielfältig und waren insgesamt im Hinblick auf die gestellte Aufgabe nicht zu erwarten. Hierzu im Einzelnen: Entgegen den technischen Anweisungen des eingangs geschilderten Standes der Technik ist es erfindungsgemäß mittels einer einfachen Nassvermahlung von Phthalocyanin-Rohblau in Gegenwart kleiner Mengen aromatischer Verbindungen, vergleichsweise kleiner Mengen Harze, langkettiger Carbonsäuren und Druckfarbenölen möglich, direkt ein qualitativ hochwertiges Produkt zu erzeugen, indem das Reagglomerieren der mikronisierten Teilchen während des Vermahlschrittes verhindert wird. Durch nachfolgendes "Flushen" der im Schritt b) erhaltenen wässrigen Suspension des Phthalocyanin-Pigments in einem Kneter gehen die Pigmentteilchen in die lipophile Phase über, so dass sich das Wasser separiert. Dieses kann nun einfach dekantiert werden. Der Rest kann durch Erhitzen im Kneter bei Unterdruck eliminiert werden. Alle ionischen Verunreinigungen sind in Wasser gelöst und automatisch aus der lipophilen Phase durch Dekantieren des Wassers entfernt. Die gezielte Kombination spezieller Rezepturen mit den jeweiligen angemessenen vorteilhaften Parametern bei dem Nassverfahren ermöglicht es, die allgemein üblichen (räumlich und zeitlich getrennten) Einzelschritte der mechanischen Verkleinerung des Phthalocyanin-Rohblaus mit anschließender Deagglomerierung, Rekristallisation der Primärpartikel sowie deren Stabilisierung/Konditionierung in einem einzigen Schritt (Schritt b) mit parallel und konsekutiv ablaufenden Prozessen in einem einzigen "Reaktionsgefäß" zusammenzufassen. Dabei wird ein β-Phthalocyanin-Blaupigment erhalten, das hinsichtlich der koloristischen und sonstigen pigmentphysikalischen Eigenschaften besonders für den Offset-Druckfarbenbereich bekannten Handelsprodukten überlegen ist.

Das β-Phthalocyanin-Blaupigment braucht nicht isoliert zu werden. Eine Einarbeitung in die Matrix kann sich als nachfolgender Schritt problemlos anschließen. Eine abschließende Behandlung auf einem Dreiwalzenstuhl als Sicherheitsaggregat zum Zerkleinern eventuell vorhandener Überkörner erübrigt sich. Allenfalls zur Entgasung der Präparation kann eine Dreiwalzenstuhl-Behandlung erfolgen.

Der Hauptvorteil des Verfahrens liegt darin, dass es die Herstellung eines in jeder Hinsicht qualitativ hochwertigen β-Phthalocyanin-Blaupigments (C.I. PB 15:3) für den Einsatz in Offsetdruckfarben aus einer Rohblau-Aufschlämmung durch einfaches Nassvermahlen in einem speziellen Mahlmedium ermöglicht. Neben beachtenswerten ökonomischen und ökologischen Vorteilen aufgrund des Einsatzes nur kleiner Mengen an "verlorenen" Verfahrenshilfsmitteln sind die folgenden unterscheidenden vorteilhaften Merkmale herauszustellen:
Die anfallende wässrige Suspension ist aufgrund ihrer Pumpfähigkeit einfacher zu handhaben. Zudem ist sie im Vergleich zu herkömmlichem Pigmentpresskuchen kostengünstiger und umweltschonender herzustellen. Die angesprochenen Finishschritte lassen sich in einem einzigen Reaktor vollziehen, wodurch nachfolgende kostenaufwendige Isolier- und Transportschritte vermieden werden können. Die erzielte Qualität im Applikationsmedium ist darüber hinaus den aus konveritionellen Pigmentpresskuchen hergestellten Pigmenten und Pigmentpräparationen überlegen und lässt sich zudem im Hinblick auf die wünschenswerten verschiedenen Anwendungsmöglichkeiten einfacher herstellen. Der klare Farbton des Verfahrenserzeugnisses ist das Ergebnis der Zugabe kleiner Mengen an oben genannten Zusatzstoffen, die die während der Vermahlung der Aufschlämmung des Phthalocyanin-Rohblaus zunächst entstehenden kleinen, nicht gut kristallisierten Teilchen optimal rekristallisieren lassen und gleichzeitig die rekristallisierten Pigmentpartikel konditionieren. Hierbei ist es im Vergleich zu herkömmlichen Finish-Verfahren insbesondere vorteilhaft, dass die Menge an eingesetzten aromatischen Verbindungen (β-dirigierend) in der Regel lediglich etwa 0,1 bis 8 Gew.-% in der Suspension beträgt; während die herkömmlichen Vergleichsverfahren einen Überschuss von 50 bis 600% (!) an (auch aromatischen) Lösungsmitteln erfordern. Somit wird erfindungsgemäß ein nahezu vernachlässigbarer Anteil an Hilfsstoffen benötigt, wenn mit den Verfahren des Standes der Technik verglichen wird. Nach den herkömmlichen Verfahren ist zum Zerstören übergroßer Teilchen in Druckfarbenkonzentraten der Einsatz eines Dreiwalzenstuhles dringend erforderlich. Dies kann erfindungsgemäß vermieden werden. Das Entgasen erfolgt beispielsweise in einer einfachen Vakuumkammer.

Der wirtschaftliche Vorteil des Verfahrens zeigt sich insbesondere darin, dass es, anders als die Verfahren des Standes der Technik, vergleichsweise zeitsparend und unter vergleichsweise geringem Lösungsmittelaufwand durchgeführt werden kann. Es ist billiger als die bekannten Mahl-/Rekristallisierungs-/Konditionierungs-Verfahren oder "Salzmahlmethoden". Des Weiteren ist der apparative Aufwand zur Produktion weniger aufwendig im Vergleich zu herkömmlichen Verfahren. Dies gilt insbesondere im Vergleich zur Salzmahlmethode, da die Erfindung keine wesentlichen Wasch- und Salz-Entfernungsschritte erfordert. Der verringerte Aufwand an Hilfsstoffen führt zu einem Vorteil bei der Lagerung hinsichtlich Platzbedarf und Prozess-Sicherheit.

Es war höchst überraschend, dass die angesprochenen kleinen Mengen an β-Phasen-dirigierenden aromatischen Verbindungen ausreichen, um die restlichen Anteile α-Modifikation im Rohblau in β-Blau-Kristalle zu überführen. Ohne dass beabsichtigt ist, sich an diese Theorie zu binden, kann angenommen werden, dass der Grund in der Kombination mit den Zusatzstoffen liegt, die bei der Durchführung des erfindungsgemäßen Verfahrens in Schritt a) eingesetzt werden und die im Schritt b) in räumlicher Nähe zum Rohblau der Einwirkung der Rührwerkskugelmühle ausgesetzt werden (insbesondere bei hoher Scherkraft- und Reibung einer Mikromedia-Mühle, kombiniert mit ausreichender Wärmeeinwirkung (z.B. bei etwa 30 bis 95°C)). Bei den Bemühungen um eine Optimierung des erfindungsgemäßen Verfahrens wurde gefunden, dass ein Nacherhitzen des Pigmentes nach einem Mahlen während 6 bis 8 Stunden bei 60 bis 95 °C dessen Qualität weiter verbessert. Diese Maßnahme ist nicht als zwingend anzusehen, sondern sie soll als im Einzelfall vorteilhafter zusätzlicher Schritt angesehen werden, um für Hochleistungsanwendungen eine weitere Optimierung zu erzielen.

Im Ergebnis wird erfindungsgemäß ein vorzügliches Produkt erzielt, das den angesprochenen Anwendungszwecken mit Vorteil zugeführt werden kann. Insbesondere treten die gute Koloristik und applikationstechnische Vorteile des erhaltenen β-Phthalocyanin-Blaupigments in blauen Offsetdruckfarben in Erscheinung.

Die Erfindung soll nachfolgend anhand von Beispielen noch näher erläutert werden. Diese sollen keineswegs beschränkend sein. Alle Prozentangaben beziehen sich - wenn nicht ausdrücklich anders vermerkt - auf Massen-%; "100%" beziehen sich dabei auf den Gesamtansatz.

### Beispiel 1

Ein mittels Dissolver hergestelltes homogenes Gemisch aus 32,1% nach dem Phthalsäureanhydridverfahren synthetisiertes Kupferphthalocyanin-Rohblau (Crude) mit einer Reinheit von 74%, 0,3% Palmitin/Stearinsäureglycerid, 1,3% Natriumhydroxid, 1,1% Phenolmodifiziertes Kohlenwasserstoffharz, 4,3% Ölsäure-Natriumsalz, 3,9% 2-Methyl-1-propanol, 1,2% Mineralöl PKWF 4/7, 0,2% Acenaphthen und 55,6% Wasser wird in den Vorlagebehälter einer Labor-Hochleistungsrührwerkskugelmühle überführt. Die Suspension wird im Rezirkulationsverfahren 230 Minuten lang vermahlen. Die Umfangsgeschwindigkeit des Rotors beträgt 6,8 m/s. Die Mahlkammer der Mühle ist mit 76 Vol.-% Zirkonoxidperlen (0,7 - 0,9 mm Durchmesser) als Mahlkörper bestückt. Die Mahlguttemperatur beträgt 45 bis 48°C.

Nach Beenden des Finish wird das Produkt auf 20 bis 25 °C abgekühlt und der pH-Wert mit 2%iger Schwefelsäure auf 5,5 erniedrigt. Die Isolation des β-Phthalocyanin-Blaupigments erfolgt durch Filtration mittels Büchnertrichter oder Filterpresse sowie Nachwaschen des Filterkuchens mittels Leitungswasser und demineralisiertem Wasser bis zur Leitfähigkeit 180 microS/cm und pH 6,8.

Der erhaltene Pigmentpresskuchen wird bis zur Gewichtskonstanz bei 90 °C im Umlufttrockenschrank getrocknet; das getrocknete Produkt wird mittels Schlagmühle pulverisiert.

Alternativ wird das fluide Mahlgut wie folgt in einen "Flush" überführt :
In einen beheizbaren Doppelwellenkneter mit Sigma-Knetwerkzeugen (Bruttovolumen 2,7 l) der Fa. Lleal werden 1405 g Mahlgut chargiert. Mit 5 %iger Salzsäure wird der pH - Wert auf 6,8 - 7,2 eingestellt. Unter Kneten gibt man anschließend 122,3 g phenolmodifiziertes Kohlenwasserstoffharz, 81,1 g phenolmodifizierten Rosin Ester, 137,0 g Mineralöl PKWF 4/7 af new und 5,9 g tert.-Butyl-hydrochinon dazu. Das Knetprodukt wird auf 65 °C erhitzt. Nach Eintreten des ersten sog. "Break" wird das überstehende Wasser dekantiert. Anschließend gibt man weitere 612 g der oben hergestellten Pigmentsuspension unter Agitation dazu. Nach Einstellen des pH-Wertes auf 6,2 - 6,6 mit 5 %iger Salzsäure gibt man 13,9 g monosulfoniertes Kupferphthalocyaninblau dazu. Die Masse wird bis zum Eintreten des zweiten sog. "Break" bei 65 °C geknetet. Das überstehende Wasser wird wiederum dekantiert. Durch dreimalige Zugabe von jeweils 620 g Frischwasser (wobei die dritte Zugabe aus demineralisiertem Wasser besteht), halbstündigem Kneten und Entfernen des überstehenden Wassers werden die restlichen wasserlöslichen, störenden Inhaltsstoffe aus dem Pigmentkonzentrat herausgelöst.
Nach Zugabe von 128,6 g Mineralöl PKWF 4/7 af new, 61,2 g Kohlenwasserstoffharz, 52,2 g Leinöl und 99,3 g Alkydharz folgt ein 45 minütiges Kneten bei 85 °C.
Nach Abziehen der letzten Wasseranteile bei 95 °C unter vermindertem Druck wird das pastöse Druckfarbenpräparat isoliert.

### Beispiels 2

Eingesetzte Rezeptur:
a 53,1% Wasser
b 1,3% Natriumhydroxid
c 0,4% Dioctylsulfosuccinat-Na-Salz
d 1,8% Phenolmodifiziertes Kohlenwasserstoffharz
e 4,3% Ölsäure
f 1,2% Mineralöl PKWF 4/7 af new
g 0,2% trans-Stilben
h 3,9% 2-Methyl-1-propanol
i 33,8% Kupferphthalocyanin-Crude synthetisiert nach dem Phthalsäureanhydrid-Verfahren (Reinheit 74%)

Die Durchführung des "Pigmentfinish" (Schritt b)) sowie die Pigmentisolierung oder die alternative Überführung in einen Flush erfolgt entsprechend den Angaben des Beispiels 1.

### Beispiel 3

Die Durchführung der Premixherstellung (Schritt a)) sowie die Pigmentisolierung oder die alternative Überführung in einen Flush erfolgt gemäß den Angaben des Beispiels 1, während der Schritt b) (Pigmentfinish) während 180 Minuten mit 8,9 m/s Umfangsgeschwindigkeit des Rotors der Rührwerkskugelmühle bei einer Mahlguttemperatur von 50 bis 53°C durchgeführt wird.

### Beispiel 4

Eingesetzte Rezeptur:
a 59,9% Wasser
b 1,3% Natriumhydroxid
c 0,4% Glyceryloleat
d 1,8% phenolmodifiziertes Kohlenwasserstoffharz
e 4,3% Ölsäure
f 2,2% Mineralöl PKWF 4/7 af new
g 0,2% trans-Stilben
h 3,9% 2-Methyl-1-propanol
i 26,0% Kupferphthalocyanin-Crude synthetisiert nach dem Phthalodinitril-Verfahren (Reinheit 96%)

Der Schritt b) (Pigmentfinish) erfolgt gemäß den Angaben des Beispiels 3, während die Pigmentisolierung oder die alternative Überführung in einen Flush entsprechend den Angaben des Beispiels 1 erfolgt.

### Beispiel 5

Eingesetzte Rezeptur:
a 50,9% Wasser
b 1,3% Natriumhydroxid
c 0,6% Alkoholethoxylat/propoxylat
d 2,1% Hydriertes Kolophoniumharz
e 4,3% Ölsäure
f 1,2% Mineralöl PKWF 4/7 af new
g 0,2% trans-Stilben
h 13,9% 2-Methyl-1-propanol
i 26,0% Kupferphthalocyanin-Crude synthetisiert nach dem Phthalodinitril-Verfahren (Reinheit 96%)

Der Schritt b) (Pigmentfinish) erfolgt gemäß den Angaben des Beispiels 3, während die Pigmentisolierung oder die alternative Überführung in einen Flush entsprechend den Angaben des Beispiels 1 erfolgt.

### Beispiel 6

Eingesetzte Rezeptur:
a 40,6% Wasser
b 1,3% Natriumhydroxid
c 0,4% Tetramethyldecyndiol
d 1,8% Hydriertes Kolophoniumharz
e 4,3% Ölsäure
f 1,2% Mineralöl PKWF 4/7 af new
g 0,2% 1,2,4,5-Tetramethylbenzol
h 3,9% 2-Methyl-1-propanol
i 46,3% Wässriger Kupferphthalocyanin-Crude-Presskuchen synthetisiert nach dem Phthalsäureanhydrid-Verfahren (Feststoffgehalt 63%)

Der Schritt b) (Pigmentfinish) erfolgt gemäß den Angaben des Beispiels 3, während die Pigmentisolierung oder die alternative Überführung in einen Flush entsprechend den Angaben des Beispiels 1 erfolgt.

### Beispiel 7

Eingesetzte Rezeptur:
a 59,4% Wasser
b 1,3% Natriumhydroxid
c 0,6% Natriumdodecyldiphenyloxid-disulfonat
d 3,1% Phenolmodifiziertes Kolophoniumharz
e 4,3% Ölsäure
f 1,2% Mineralöl PKWF 4/7 af new
g 0,2% Anthracen
h 3,9% 2-Methyl-1-propanol
i 26,0%-Kupferphthalocyanin-Crude synthetisiert nach dem Phthalsäureanhydrid-Verfahren (Reinheit 98%)

Der Schritt b) (Pigmentfinish) sowie die Pigmentisolierung oder die alternativeÜberführung in einen Flush erfolgen entsprechend den Angaben des Beispiels 1.

### Beispiel 8

Die Premixherstellung (Schritt a)) erfolgt gemäß Beispiel 7. Das Pigmentfinishing (Schritt b)) erfolgt während 180 Minuten mit 8,9 m/s Umfangsgeschwindigkeit des Rotors der Rührwerkskugelmühle bei einer Mahlguttemperatur von 51 bis 53°C. Die Isolierung des Pigments (Schritt c) oder die alternative Überführung in einen Flush erfolgt gemäß der Vorgehensweise des Beispiels 1.

### Beispiel 9

Eingesetzte Rezeptur:
a 58,3% Wasser
b 1,3% Natriumhydroxid
c 0,6% Natriumdodecyldiphenyloxid-disulfonat
d 2,1% Phenolmodifiziertes Kolophoniumharz
e 4,3% Ölsäure
f 1,2% Mineralöl PKWF 4/7
g 0,2% Anthracen
h 3,9% 2-Propanol
i 28,1% Kupferphthalocyanin-Crude synthetisiert nach dem Phthalsäureanhydrid-Verfahren (Reinheit 94%)

Der Schritt b) (Pigmentfinish) erfolgt während 230 Minuten bei 8,9 m/s (Umfangsgeschwindigkeit des Rotors der Rührwerkskugelmühle) und bei einer Mahlguttemperatur von 50 bis 53°C. Pigmentisolierung oder alternative Überführung in einen Flush siehe Beispiel 1.

### Beispiel 10

Eingesetzte Rezeptur:
a 58,3% Wasser
b 1,3% Natriumhydroxid
c 0,6% Alkoholethoxylat/propoxylat
d 2,1% Phenolmodifiziertes Kolophoniumharz
e 4,3% Ölsäure
f 1,2% Mineralöl PKWF 4/7
g 0,2% Anthracen
h 3,9% 2-Propanol
i 28,1% Kupferphthalocyanin-Crude synthetisiert nach dem Phthalsäureanhydrid-Verfahren (Reinheit 94%)

Der Schritt b) (Pigmentfinish) erfolgt entsprechend den Angaben des Beispiels 9, wobei Zirkonoxid durch Steel Shot (0,6 bis 0,8 mm Durchmesser) ersetzt und eine Mahlguttemperatur von 54 bis 57°C eingestellt wird. Die Pigmentisolierung oder und die alternative Überführung in einen Flush erfolgt gemäß den Angaben des Beispiels 1.

### Beispiel 11

Eingesetzte Rezeptur:
a 58,3% Wasser
b 1,3% Natriumhydroxid
c 0,6% Dioctylsulfosuccinat-Na-Salz
d 2,1% Hydriertes Kolophoniumharz
e 4,3% Ölsäure
f 1,2% Mineralöl PKWF 4/7 af new
g 0,2% Anthracen
h 3,9% 2-Propanol
i 28,1% Kupferphthalocyanin-Crude synthetisiert nach dem Phthalsäureanhydrid-Verfahren (Reinheit 95%)

Der Schritt b) (Pigmentfinish) erfolgt entsprechend den Angaben des Beispiels 10 bei einer Mahlguttemperatur von 54 bis 57°C, während die Pigmentisolierung wie folgt durchgeführt wird: Nach Abkühlen des Mahlgutes auf 24°C wird der pH-Wert mit 5%iger Salzsäure auf 3,0 gesenkt. Die weiteren Maßnahmen erfolgen gemäß den Angaben des Beispiels 1.
Die alternative Überführung in einen Flush erfolgt gemäß Beispiel 1.

### Beispiel 12

Die Premixherstellung (Schritt a) erfolgt entsprechend den Angaben des Beispiels 10. Der Schritt b) (Pigmentfinish) wird während 180 Minuten mit 11,4 m/s Umfangsgeschwindigkeit des Rotors der Rührwerkskugelmühle bei einer Mahlguttemperatur von 59 bis 61°C durchgeführt. Die Pigmentisolierung oder die alternative Überführung in einen Flush erfolgt entsprechend den Angaben des Beispiels 1.

### Anmerkungen zu den obigen Beispielen:

Das Intermediat aus Schritt b) (= Pigmentfinish) kann wie ein handelsüblicher wässriger Pigmentpresskuchen mittels eines allgemein bekannten Flushprozesses sowohl in kontinuierlich als auch in batchweise arbeitenden Knetmaschinen direkt zu lipophilen Farbkonzentraten, speziell zu Offset-Druckfarbenkonzentraten (Flushes) verarbeitet werden. Vorteil der hier (an Stelle von Pigmentpresskuchen) eingesetzten Pigmentsuspensionen: Wegen der geringen Viskosität sind diese pumpbar und somit viel leichter zu verarbeiten.

Das Let down zum Beispiel zu einer Druckfarbe mit einem Pigmentierungsgrad von 12% erfolgt durch zweistündiges Einarbeiten des Konzentrates mittels Dissolvers bei einer Umfangsgeschwindigkeit von 5 m/s und einer Temperatur von 65 bis 70°C in eine ölbasierende Druckfarbenmatrix, zusammengesetzt aus 29% niedrigmolekularem Kohlenwasserstoffharz, 8% hochmolekularem Kohlenwasserstoffharz, 6% Kolophoniumharz, 38% Mineralöl, 16% Alkydharz, 1% Wachs, 1% "Antiskinning agent" (2-tert.-Butylhydrochinon) und 1% Zinkstearat.

Die Druckfarbe kann in einer Passage auf einem Dreiwalzenstuhl entlüftet werden. Ein Magnetabscheider ist nach unserer Erfahrung nicht erforderlich, kann jedoch in den Prozess integriert werden. Man erhält sehr stabile, grünstichig blaue Druckfarben von hoher Farbstärke und Ergiebigkeit bei guten Fließ- und Druckeigenschaften. Die Drucke zeichnen sich zudem durch hervorragende Transparenz und guten Glanz aus. Farbstärke und Koloristik werden gegen entsprechend aus Mitbewerberprodukten präparierte Druckfarben gleichen Pigmentierungsgrades dadurch verglichen, dass die resultierenden 12%igen Druckfarben durch Abmischen mit einer titandioxidbasierenden Weißpaste (S-Viskose-Weiss N 1305 TR; Gebr. Schmidt Druckfarben) mittels Universal-Mischgerät (Fa. Hauschild) auf einen Buntpigmentgehalt von 1,9% eingestellt und auf Weißkarton aufgezogen werden. Die koloristische Beurteilung erfolgt durch Vermessung mittels Spektralphotometer bei 45°/0° - D 65/10°.

Das aus der Pigmentsuspension isolierte Trockenpigment wird mit einem Universalmischgerät in der vierfachen Menge Anreibefirnis (Ro-zet 12 E 0185-1; Gebr. Schmidt Druckfarben) vordispergiert. Die resultierende Paste mit einem Pigmentgehalt von 20% wird mittels Telleranreibmaschine verrieben und durch Homogenisierung mit weiterem Anreibefirnis mittels Hauschild-Mixer auf einen Pigmentgehalt von 12% eingestellt. Eine Polish- und Entlüftungspassage auf einem Dreiwalzenstuhl komplettiert die Druckfarbenherstellung. Die Prüfungen gemäß oben beschriebener Methoden ergeben ähnlich gute Ergebnisse wie sie erhalten werden, wenn man bei der Herstellung der Druckfarbe über den Weg des Flushprozesses geht (s.o.).

## Patentansprüche

1. Verfahren zur Herstellung einer wässrigen Suspension von β-Phthalocyanin-Blaupigment unter Einsatz einer Rührwerkskugelmühle, **dadurch gekennzeichnet, dass**
**a)** ein Phthalocyanin-Rohblau mittels eines Dissolvers in einem wässrigen Medium suspendiert wird und
**b)** die erhaltene wässrige Suspension des Phthalocyanin-Rohblaus bei einer Temperatur von 30°C bis 95°C in einer Rührwerkskugelmühle, in der der Füllgrad mit Mahlperlen 60 bis 95 Vol.-% beträgt, zu einer Suspension eines β-Phthalocyanin-Blaupigments vermahlen und konditioniert wird, wobei
**c)** der wässrigen Suspension des β-Phthalocyanin-Rohblaus ein Dispergiermittel, ein Bindemittelharz, eine β-Phasen-dirigierende aromatische Verbindung, ein Druckfarbenöl, ein polares Lösungsmittel als Lösungsvermittler und eine Base einverleibt sind.

2. Verfahren nach Anspruch 1, **dadurch gekennzeichnet, dass** beim Merkmal c) der wässrigen Suspension zusätzlich lipophile, mit dem endgültigen Anwendungsmedium kompatible Bindemittel und/oder Pigmentoberflächen-konditionierende Verbindungen einverleibt sind.

3. Verfahren nach einem der Ansprüche 1 bis 2, **dadurch gekennzeichnet, dass** die Substanzen bzw. Verbindungen gemäß Merkmal c) in einer Menge von 0,1 bis 25 Gew.-%, insbesondere von 1 bis 10 Gew.-%, in der wässrigen Suspension vorliegen.

4. Verfahren nach mindestens einem der Ansprüche 1 bis 3, **dadurch gekennzeichnet, dass** der Schritt b) als Rezirkulationsverfahren durchgeführt wird, wobei die durchschnittliche Verweilzeit des Mahlgutes in der Rührwerkskugelmühle 4 bis 35 min, insbesondere 12 bis 25 min, beträgt.

5. Verfahren nach mindestens einem der Ansprüche 1 bis 4, **dadurch gekennzeichnet, dass** der Behälter zur Durchführung des Schrittes a) und der Vorratsbehälter zur Durchführung des Schrittes b) identisch sind und sich der Wechsel von Schritt a) zu Schritt b) auf das Öffnen und Schließen einiger sinngemäß erforderlicher Ventile sowie das Einschalten der Umwälzpumpe und der Mühle beschränkt.

6. Verfahren nach mindestens einem der Ansprüche 1 bis 5, **dadurch gekennzeichnet, dass** die Umfangsgeschwindigkeit des Rotors der Rührwerkskugelmühle 4 bis 18 m/s, insbesondere 9 bis 14 m/s, beträgt.

7. Verfahren nach mindestens einem der Ansprüche 1 bis 6, **dadurch gekennzeichnet, dass** in der Rührwerkskugelmühle Mahlperlen aus Keramik oder Stahl eingesetzt werden.

8. Verfahren nach Anspruch 7, **dadurch gekennzeichnet, dass** die Mahlperlen einen Durchmesser von 0,2 bis 1,5 mm, insbesondere 0,5 bis 1,0 mm aufweisen.

9. Verfahren nach mindestens einem der Ansprüche 1 bis 8, **dadurch gekennzeichnet, dass** der Füllgrad der Rührwerkskugelmühle mit Mahlperlen 80 bis 90% beträgt.

10. Verfahren nach mindestens einem der Ansprüche 1 bis 9, **dadurch gekennzeichnet, dass** die wässrige Suspension beim Schritt a) auf 15 bis 55 Gew.-% Phthalocyanin-Rohblau-Pigment, insbesondere 30 bis 50 Gew.-%, und 40 bis 60 Gew.-% Wasser, insbesondere 45 bis 55 Gew.-%, und Rest weitere Bestandteile eingestellt wird.

11. Verfahren nach mindestens einem der Ansprüche 1 bis 10, **dadurch gekennzeichnet, dass** in der wässrigen Suspension im Schritt a) die Base auf eine Konzentration von 0,3 bis 2,0 Gew.-%, insbesondere auf 0,4 bis 1,4 Gew.-%, und das Dispergierhilfsmittel auf eine Konzentration von 0,1 bis 0,9 Gew.-%, insbesondere 0,2 bis 0,6 Gew.-%, eingestellt wird.

12. Verfahren nach mindestens einem der Ansprüche 1 bis 11, **dadurch gekennzeichnet, dass** in dem wässrigen Medium im Schritt a) das Bindemittelharz auf eine Konzentration von 1,0 bis 5,0 Gew.-%, insbesondere 1,5 bis 3,5 Gew.-%, die langkettige Carbonsäurederivats auf eine Konzentration von 1,0 bis 5,0 Gew.-%, insbesondere von 1,5 bis 3,0 Gew.-%, das Druckfarbenöl auf eine Konzentration von 0,7 bis 7,0 Gew.-%, insbesondere 1,0 bis 4,5 Gew.-%, die aromatische Verbindung auf eine Konzentration von 0,5 bis 6,0 Gew.-% und das polare Lösungsmittel auf eine Konzentration von 0,1 bis 20 Gew.-%, insbesondere 0,5 bis 10 Gew.-%, eingestellt werden.

13. Verfahren nach mindestens einem der Ansprüche 1 bis 12, **dadurch gekennzeichnet, dass**
- als Dispergiermittel Alkoholethoxylat/propoxylat, Tetramethyldecyndiol, Dictylsulfosuccinat-Na-Salz, Glyceryloleat, Natriumdodecyldiphenyloxid-disulfonat, Ammoniumpolyacrylat, Diethylenglycolstearat, Pentaerythrityloleat, Diisopropylnaphthalin-Natriumsulfonat, PEG-Glyceryloleat und/oder Palmitin/Stearinsäureglycerid,
- als Bindemittelharz Phenol-modifiziertes Kohlenwasserstoffharz, Alkydharz, Kohlenwasserstoffharz, hydriertes Kolophoniumharz, Phenol-modifiziertes Kolophoniumharz, Pentaerythritol-Rosin-Ester, Kolophoniumharz, Phenolmodifizierter Rosin-Ester und Maleinmodifizierter Rosin-Ester, Ketonharz, Aldehydharz, Melamin-Formaldehyd-Kondensationsharz und/oder Acrylharz,
- als langkettige Carbonsäure Stearinsäure, Palmitinsäure, Ölsäure, Dodecansäure, Linolsäure, Linolensäure und/oder Myristinsäure,
- als β-Phasen-dirigierende aromatische Verbindungen Dibenzofuran, 1,8-Naphthal-imid, Benzil, Diphenylcarbinol, 1-Methylnaphthalin, Phthalsäureanhydrid, Benzoesäure, Benzophenon, trans-Stilben, 1,2,4,5-Tetramethylbenzol, Anthracen, und/oder Dibenzylether,
- als Druckfarbenöl verschiedene Mineralöle und (auch chemisch modifizierte) Pflanzenöle,
- als polare Lösemittel (Lösungsvermittler) Cyclohexanol, Dioxan, Butylglykol, Amylalkohol, Dodecylalkohol, Aceton, 2-Methyl-3-buten-2-ol, Dimethylformamid, Dimethylsulfoxid, 3-Methyl-1-butanol, Tetrahydrofuran, 2-Propanol, 2-Methyl-1-propanol und/oder Polyethylenglykol,
- als Base Kaliumhydroxid, Natriumhydroxid, eine wässrige Ammoniaklösung, Monoethanolamin und/oder Triethanolamin
eingesetzt werden.

14. Verwendung der gemäß dem Verfahren nach einem der Ansprüche 1 bis 13 erhaltenen wässrigen Suspension zur Isolierung eines konditionierten β- Phthalocyanin-Blaupigmentpulvers.

15. Verwendung der gemäß dem Verfahren nach mindestens einem der Ansprüche 1 bis 13 erhaltenen wässrigen Suspension von β-Phthalocyanin-Blaupigment zur direkten Überführung in ein lipophiles Farbkonzentrat, insbesondere im Rahmen eines Flush-Kneterverfahrens.

## Claims

1. Method for producing an aqueous suspension of β-phthalo-cyanine blue pigment, using an agitator ball mill, **characterized in that**
a) a phthalo-cyanine crude blue is suspended by means of a dissolver in an aqueous medium, and
b) the obtained aqueous suspension of the phthalo-cyanine crude blue is ground and conditioned to a suspension of a β-phthalo-cyanine blue pigment at a temperature of 30 °C to 95 °C in an agitator ball mill, in which the fill ratio with grinding beads is 60 to 95 volume %, wherein
c) a dispersant, a binder resin, a β-phase directing aromatic compound, a print color oil, a polar solvent as solubilizer and a base are incorporated in the aqueous suspension of the β-phthalo-cyanine crude blue.

2. Method according to claim 1, **characterized in that** in the feature c) lipophilic binders compatible with the final application medium and/or pigment surface conditioning compounds are additionally incorporated in the aqueous suspension.

3. Method according to any one of claims 1 to 2, **characterized in that** the substances or compounds according to feature c) are present in an amount of 0.1 to 25 % by weight, in particular 1 to 10 % by weight in the aqueous suspension.

4. Method according to at least one of claims 1 to 3, **characterized in that** step b) is performed as a recirculation method, wherein the average dwelling time of the grinding product in the agitator ball mill is 4 to 35 min., in particular 12 to 25 min.

5. Method according to at least one of claims 1 to 4, **characterized in that** the vessel for performing step a) and the reservoir for performing step b) are identical, and the change from step a) to step b) is restricted to opening and closing of several correspondingly required valves as well as switching on the circulating pump and the mill.

6. Method according to at least one of claims 1 to 5, **characterized in that** the circumferential speed of the rotor of the agitator ball mill is 4 to 18 m/s, in particular 9 to 14 m/s.

7. Method according to at least one of claims 1 to 6, **characterized in that** grinding beads made of ceramic or steel are employed in the agitator ball mill.

8. Method according to claim 7, **characterized in that** the grinding beads have a diameter of 0.2 to 1.5 mm, in particular 0.5 to 1.0 mm.

9. Method according to at least one of claims 1 to 8, **characterized in that** the fill ratio of the agitator ball mill with grinding beads is 80 to 90 %.

10. Method according to at least one of claims 1 to 9, **characterized in that** the aqueous suspension in step a) is adjusted to 15 to 55 % by weight of phthalo-cyanine crude blue pigment, in particular 30 to 50 % by weight, and 40 to 60 % by weight of water, in particular 45 to 55 % by weight, and the remainder of further components.

11. Method according to at least one of claims 1 to 10, **characterized in that** in the aqueous suspension in step a) the base is adjusted to a concentration of 0.3 to 2.0 % by weight, in particular 0.4 to 1.4 % by weight, and the dispersion auxiliary agent is adjusted to a concentration of 0.1 to 0.9 % by weight, in particular 0.2 to 0.6 % by weight.

12. Method according to at least one of claims 1 to 11, **characterized in that** in the aqueous medium in step a) the binder resin is adjusted to a concentration of 1.0 to 5.0 % by weight, in particular 1.5 to 3.5 % by weight, the long-chain carboxylic acid derivative is adjusted to a concentration of 1.0 to 5.0 % by weight, in particular 1.5 to 3.0 % by weight, the print color oil is adjusted to a concentration of 0.7 to 7.0 % by weight, in particular 1.0 to 4.5 % by weight, the aromatic compound is adjusted to a concentration of 0.5 to 6.0 % by weight, and the polar solvent is adjusted to a concentration of 0.1 to 20 % by weight, in particular 0.5 to 10 % by weight.

13. Method according to at least one of claims 1 to 12, **characterized in that**
- alcohol-ethoxylate/propoxylate, tetramethyldecyndiol, dioctylsulfosuccinate-Na-salt, glyceryloleate, sodium dodecyl diphenyloxide disulfonate, ammonium polyacrylate, diethylene glycol stearate, pentaerythrityloleate, diisopropyl naphthalene sodium sulfonate, PEG-glyceryloleate and/or palmitic/stearic acid glyceride is used as the dispersant,
- phenol-modified hydrocarbon resin, alkyd resin, hydrocarbon resin, hydrated colophony resin, phenol-modified colophony resin, pentaerythritol rosin ester, colophony resin, phenol-modified rosin ester and maleic-modified rosin ester, ketone resin, aldehyde resin, melamine formaldehyde condensation resin and/or acrylic resin is used as the binder resin,
- stearic acid, palmitic acid, oleic acid, dodecane acid, linoleic acid, linolenic acid and/or myristic acid is used as the long-chain carboxylic acid,
- dibenzofurane, 1,8-naphthalimide, benzil, diphenyl-carbinol, 1-methylnaphthalene, phthalic acid anhydride, benzoic acid, benzophenone, transstilbene, 1,2,4,5-tetramethylbenzene, anthracene and/or dibenzyl ether is used as β-phase directing aromatic compounds,
- various mineral oils and (also chemically modified) vegetable oils are used as the print color oil,
- cyclohexanol, dioxane, butylglycol, amyl alcohol, dodecyl alcohol, acetone, 2-methyl-3-butene-2-ol, dimethylformamide, dimethyl sulfoxide, 3-methyl-1-butanol, tetrahydrofuran, 2-propanol, 2-methyl-1-propanol and/or polyethylene glycol is used as the polar solvents (solubilizers),
- potassium hydroxide, sodium hydroxide, an aqueous ammonia solution, monoethanolamine and/or triethanolamine is used as the base.

14. Use of the aqueous suspension obtained according to the method according to any one of claims 1 to 13 for isolation of a conditioned β-phthalo-cyanine blue

15. Use of the aqueous suspension of β-phthalo-cyanine blue pigment obtained according to the method according to at least one of claims 1 to 13 for direct transformation into a lipophilic color concentrate, in particular within the scope of a flush kneader method.

## Revendications

1. Procédé pour fabriquer une suspension aqueuse de pigment bleu de β-phtalocyanine en utilisant un broyeur-agitateur à galet, **caractérisé en ce que**
a) un bleu brut de phtalocyanine est suspendu au moyen d'un bac de dissolution dans un milieu aqueux et
b) la suspension aqueuse obtenue à partir du bleu brut de phtalocyanine est moulée et conditionnée à une température de 30°C à 95°C dans un broyeur-agitateur à galet, dans lequel le taux de remplissage avec des perles de broyage va de 60 à 95 % de volume, pour obtenir une suspension d'un pigment bleu de β-phtalocyanine,
c) un dispersant, une résine servant de liant, un composé aromatique dirigeant des phases β, une huile pour encre d'imprimerie, un solvant polaire comme agent de solubilisation et une base étant intégrés à la suspension aqueuse du bleu brut de β-phtalocyanine.

2. Procédé selon la revendication 1, **caractérisé en ce que**, pour la caractéristique c), des liants lipophiles, compatibles avec le milieu d'application définitif et/ou des composés conditionnant la surface du pigment sont intégrés en supplément à la suspension aqueuse.

3. Procédé selon l'une quelconque des revendications 1 à 2, **caractérisé en ce que** les substances ou composés définis selon la caractéristique c) sont présents dans une quantité de 0,1 à 25 % en poids, en particulier de 1 à 10 % en poids, dans la suspension aqueuse.

4. Procédé selon au moins l'une quelconque des revendications 1 à 3, **caractérisé en ce que** l'étape b) est effectuée comme procédé de recirculation, le temps de séjour moyen de la matière moulue dans le broyeur-agitateur à galet étant de 4 à 35 mn, en particulier de 12 à 25 mn.

5. Procédé selon au moins l'une quelconque des revendications 1 à 4, **caractérisé en ce que** le réservoir pour la réalisation de l'étape c) et le réservoir de stockage pour la mise en oeuvre de l'étape b) sont identiques et le passage de l'étape a) à l'étape b) se limite à l'ouverture et à la fermeture de quelques vannes indispensables par analogie et l'enclenchement de la pompe à recirculation et du broyeur.

6. Procédé selon l'une quelconque des revendications 1 à 5, **caractérisé en ce que** la vitesse périphérique du rotor du broyeur-agitateur à galet va de 4 à 18 m/s, en particulier de 9 à 14 m/s.

7. Procédé selon au moins l'une quelconque des revendications 1 à 6, **caractérisé en ce que** des perles de broyage en céramique ou en acier sont utilisées dans le broyeur-agitateur à galet.

8. Procédé selon la revendication 7, **caractérisé en ce que** les perles de broyage présentent un diamètre de 0,2 à 1,5 mm, en particulier de 0,5 à 1,0 mm.

9. Procédé selon au moins l'une quelconque des revendications 1 à 8, **caractérisé en ce que** le taux de remplissage du broyeur-agitateur à galet avec des perles de broyage varie de 80 à 90%.

10. Procédé selon au moins l'une quelconque des revendications 1 à 9, **caractérisé en ce que** la suspension aqueuse à l'étape a) est réglée sur 15 à 55 % en poids de pigment bleu brut de phtalocyanine, en particulier sur 30 à 50 % en poids, et 40 à 60 % en poids d'eau, en particulier 45 à 55 % en poids, et le reste sur d'autres composants.

11. Procédé selon au moins l'une quelconque des revendications 1 à 10, **caractérisé en ce que**, dans la suspension aqueuse et à l'étape a), la base est réglée sur une concentration de 0,3 à 2,0 % en poids et en particulier sur 0,4 à 1,4 % en poids, et l'agent auxiliaire dispersant sur une concentration de 0,1 à 0,9 % en poids, en particulier sur 0,2 jusqu'à 0,6 % en poids.

12. Procédé selon au moins l'une quelconque des revendications 1 à 11, **caractérisé en ce que**, dans le milieu aqueux et à l'étape a), la résine servant de liant est réglée sur une concentration de 1,0 à 5,0 % en poids, en particulier sur 1,5 à 3,5 % en poids, les dérivés d'acide carboxylique à chaîne longue dans une concentration de 1,0 à 5,0 % en poids, en particulier de 1,5 à 3,0 % en poids, l'huile pour encre d'imprimerie sur une concentra-tion de 0,7 à 7,0 % en poids, en particulier 1,0 à 4,5 % en poids, le composé aromatique sur une concentration de 0,5 à 6,0 % en poids et le solvant polaire sur une concentration de 0,1 à 20 % en poids, en particulier de 0,5 à 10 % en poids.

13. Procédé selon au moins l'une quelconque des revendications 1 à 12, **caractérisé en ce qu'**on utilise
- comme dispersant de l'éthoxylate/propoxylate d'alcool, du tétraméthyldécynediol, du dioctylsulfosuccinate de Na, de l'oléate de glycéryle, du dodécyldiphényleoxyde- disulfonate de sodium, du polyacrylate d'ammonium, du stéarate de diéthylène-glycol, de l'oléate de pentaérythrityle, du diisopropylnaphtalènesulfonate de sodium, de l'oléate de glycéryle-PEG et/ou un glycéride d'acide palmitique/stéarique,
- comme résine servant de liant, une résine hydrocarbonée à modification phénolique, une résine alkyde, une résine hydrocarbonée, une résine de colophane hydrogénée, une résine de colophane à modification phénolique, un ester de pantaérythritol de colophane, une résine de colophane, un ester de colophane à modification phénolique et un ester de colophane à modification maléique, une cétonique, une résine aldéhydique, une résine de condensation mélamine-formaldéhyde et/ou une résine acrylique,
- comme acide carboxylique à chaîne longue de l'acide stéarique, de l'acide palmitique, de l'acide oléique, de l'acide dodécanoïque, de l'acide linoléique, de l'acide linolénique et/ou de l'acide myristique,
- comme composés aromatiques dirigeant des phases β du dibenzofuranne, du 1,8-naphtalimide, du benzyle, du diphénycarbinol, du 1-méthylnaphtalène, de l'hydrure d'acide phtalique, de l'acide benzoïque, la benzo-phénone, du trans-stilbène, du 1,2,4,5-tétra-méthylbenzole, de l'anthracène et/ou du dibenzyléther,
- comme huile pour encres d'imprimerie, différentes huiles minérales et des huiles végétales (également modifiées chimiquement),
- comme solvants polaires (agent de solubilisation) : cyclohexanol, dioxanne, butylglycol, alcool amylique, alcool dodécylique, acétone, 2-méthyl-3-butène-2-ol, diméthylformamide, diméthylsulfoxyde, 3-méthyl-1-butanol, tétrahydrofuranne, 2-propanol, 2-méthyl-1-propanol et/ou polyéthylèneglycol,
- comme base de l'hydroxyde de potassium, de l'hydroxyde de sodium, une solution aqueuse d'ammoniac, de la monoéthanolamine et/ou de la triéthanolamine.

14. Utilisation de la suspension aqueuse obtenue selon le procédé selon l'une quelconque des revendications 1 à 13, pour l'isolation d'une poudre de pigment bleu de β-phtalocyanine conditionnée.

15. Utilisation de la suspension aqueuse obtenue selon le procédé selon au moins l'une quelconque des revendications 1 à 13, de pigment bleu de β-phtalocyanine pour le transfert direct en un concentré de couleur lipophile, en particulier dans le cadre d'un procédé de malaxage flush.
